# EUROPEAN PATENT SPECIFICATION

(11) **EP 0 641 925 B1**
(45) Date of publication and mention of the grant of the patent: **15.12.1999**
(21) Application number: 94113972.7
(22) Date of filing: 06.09.1994
(51) Int. Cl.: F02D 41/38, F02D 41/10, F02D 21/08, F02D 41/40

(54) **Smoke reducing device and method for diesel engine**
Rauchverringerungsvorrichtung und Methode für Dieselmotor
Dispositif et méthode pour déterminer la fumée pour moteur diesel

(30) Priority: 07.09.1993 JP 24642593
(43) Date of publication of application: 08.03.1995
(73) Proprietor: ZEXEL CORPORATION, Tokyo (JP)
(72) Inventor: Sekiuchi, Akira c/o Zexel Corporation, Higashimatsuyama-shi, Saitama-ken (JP); Yoshikawa, Shinji, c/o Zexel Corporation, Higashimatsuyama-shi, Saitama-ken (JP); Honda, Toshiya, c/o Zexel Corporation, Higashimatsuyama-shi, Saitama-ken (JP)
(74) Representative: Glawe, Delfs, Moll & Partner

(56) References cited:
- EP-A- 0 278 990
- US-A- 4 441 472
- US-A- 4 736 726
- "L'ixud, propulseur de la peugeot 309 diesel" INGENIEURS DE L'AUTOMOBILE, October 1987, BOULOGNE FR, pages 55-59, XP002039553

## Description

### BACKGROUND OF THE INVENTION

### 1. Field of the Invention

This invention relates to smoke reducing device and method for reducing smoke which occurs in a diesel engine.

### 2. Description of Related Art

A device for controlling the fuel injection timing in the ignition-advance direction to obtain smooth acceleration during step-on of the accelerator has been used in diesel engines (as disclosed in Japanese Laid-open Patent Application No.60-201051). In this ignition-advance control technique, the ignition-advance amount is adjusted so that acceleration under a condition where a normal load is applied to an engine (hereinafter referred to as "normal acceleration") can be smoothly performed. That is, the ignition-advance amount is mainly adjusted to smoothly perform the normal acceleration. Accordingly, the ignition-advance amount is not adjusted for an acceleration (racing) under a condition where no load is applied to an engine (hereinafter referred to as "no-load acceleration"), and thus the ignition amount for the normal acceleration is excessively large for the no-load acceleration, so that the amount of smoke which occurs due to the excessive ignition-advance is increased.

Further, there has been known a control technique which is called exhaust gas recirculation (EGR) for returning a part of exhaust gas to an inlet port of the engine to reduce nitrogen oxides in the exhaust gas during acceleration. However, like the ignition-advance control technique, in this EGR technique the return rate (EGR rate) of the exhaust gas becomes excessively large under no-load acceleration, and thus there also occurs the problem that the amount smoke is increased.

The document EP-278990 discloses a method for controllling the fuel injection timing in a diesel engine for reducing fuel consumption or noise immission. When the engine load changes from a lower load range to a higher load range, the injection timing is first temporarily retarded and then advanced to the new timing corresponding to the changed load condition. This document does not disclose any control steps for reducing smoke in case of no-load acceleration.

### SUMMARY OF THE INVENTION

An object of this invention is to provide a smoke reducing device and method for sufficiently suppressing occurrence of smoke under no-load acceleration in a diesel engine in which a ignition-advance control or EGR control is performed to improve acceleration characteristics or exhaust gas components under acceleration.

In order to attain the above object, according to one aspect of this invention, the smoke reducing device has the features of claim 1 or claim 6.

In the smoke reducing device according to this invention, under the normal acceleration, the fuel injection timing is advanced or the EGR rate is increased to perform smooth acceleration or improve exhaust gas components. On the other hand, during no-load acceleration, the ignition-advance of the fuel injection timing or the increase of the EGR rate is more suppressed as compared with that under the normal acceleration.

According to another aspect of this invention, a smoke reducing method for a diesel engine having at an ignition-advance control device for advancing the fuel injection timing under acceleration or an EGR control device for increasing the EGR rate under acceleration, comprises the features of claim 7 or claim 12.

### BRIEF DESCRIPTION OF THE DRAWINGS

- Fig. 1: is a block diagram showing the functional scheme of a first embodiment according to this invention;
- Fig. 2: is a diagram showing the damping aspect of a TPS target value in the first embodiment;
- Fig. 3: is a flowchart showing the whole flow of a fuel injection timing control in the first embodiment;
- Fig. 4: is a flowchart showing the details of a damping control processing in Fig. 3;
- Fig. 5: is a block diagram showing the functional scheme of a second embodiment according to this invention; and
- Fig. 6: is a diagram showing a damping aspect of an EGR rate in the second embodiment.

### DETAILED DESCRIPTION OF THE PREFERRED EMBODIMENTS

Preferred embodiments according to the present invention will be described with reference to the accompanying drawings.

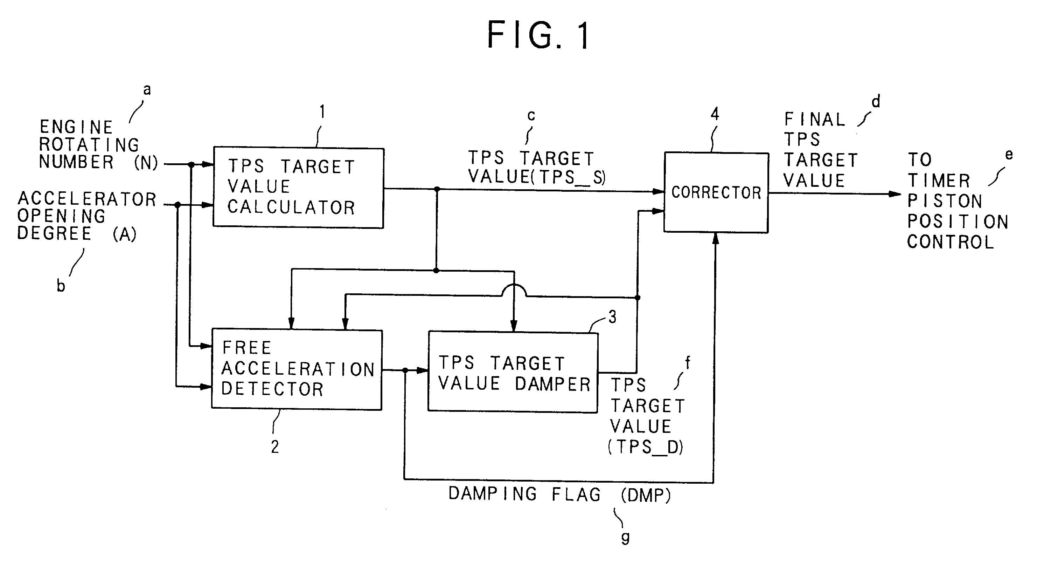

Fig. 1 is a block diagram showing the function of a first embodiment of a smoke reducing device according to the present invention. The function shown in Fig. 1 is realized by a programmed computer.

In Fig. 1, a TPS (timer position sensor) target value calculator 1 serves to determine a target value for an output signal of a timer position sensor (TPS). This target value corresponds to a control amount with which a fuel injection timing suitable for a normal acceleration is obtained.

It is well known that the TPS is a sensor for detecting the position of a timer piston which is a part for controlling the fuel injection timing of a diesel engine, and it is a basic operation of the conventional fuel injection timing control that the position of the timer piston is subjected to a feed-back control so that the output signal value of the TPS is coincident with a TPS target value TPS-S.

Upon input of signals such as the engine rotating speed N, the accelerator opening-degree A, etc., the TPS target value calculator 1 calculates a TPS target value TPS-S. This calculation is performed using a map which is beforehand prepared, or by other methods, and the detailed description thereof is omitted because these methods are well known.

The TPS target value TPS-S is calculated periodically, for example every 20ms, in the TPS value calculator 1, and then supplied to a corrector 4. Usually, the corrector 4 directly outputs the calculated TPS target value TPS-S as a final TPS target value. However, if a damping flag DMP which is operated by a no-load acceleration detector 2 as described later is in ON-state, a TPS damp target value TPS-D which is input from a TPS target value damper 3 is selected and output as a final TPS target value. The final TPS target value output from the corrector 4 is used as a target value for controlling the position of the timer piston as described above.

The main feature of this embodiment resides in the no-load acceleration detector 2 and the TPS target value damper 3.

The no-load acceleration detector 2 receives the TPS target value TPS-S from the TPS target value calculator 1 every 20ms, and on the basis of the TPS target value TPS-S, it judges whether an engine at that time is under a no-load acceleration. If the engine is judged to be under no-load acceleration, the no-load acceleration detector 2 sets the damping flag DMP to the ON-state (turn-on).

A turn-on condition and a turn-off condition of the damping flag will be described hereunder.

### A) TURN-ON CONDITION

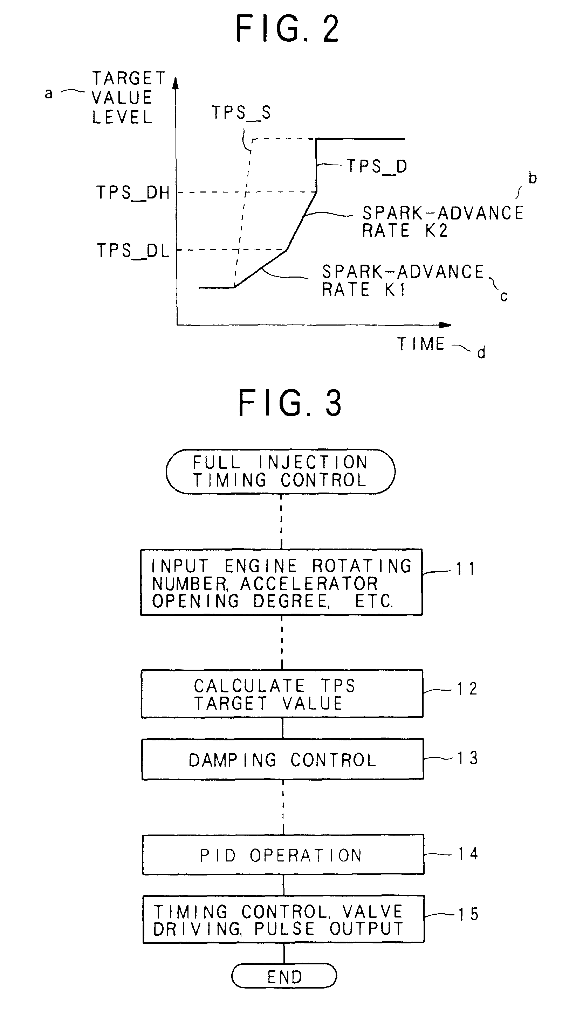

In a case where the damping flag DMP is in an off-state, if all the following conditions a) to e) are satisfied, it is judged that the no-load acceleration starts, and the damping flag DMP is turned on (set to the on-state).
a) engine rotating speed N ≤ a predetermined commonly-used upper limit rotating number N-D (for example, a fixed or variable value below 6000rpm)
b) TPS target value TPS-Sn-1 of previous period < a predetermined second damp target value switching threshold value TPS-DH (see Fig. 2)
c) accelerator opening degree variation ΔA > predetermined accelerator variation threshold value ΔA-D
d) engine rotating speed variation ΔN > a predetermined engine rotating number variation threshold value ΔN-D
e) TPS target value variation ΔTPS-S ≥ a predetermined first damp target value ignition-advance rate Kl (see Fig. 2)

### B) TURN-OFF CONDITION

In a case where the damping flag DMP is in the on-state, if all the following conditions f) to h) are satisfied, it is judged that the no-load acceleration condition is released or a damping control as described later is terminated, and the damping flag DMP is turned off (set to the off-state).
f) engine rotating speed N > a commonly-used upper limit rotating number N-D as described above
g) TPS damp target value TPS-Dn-l of previous period ≥ a second damp target value switching threshold value TPS-DH (see Fig. 2)
h) TPS damp target value TPS-Dn of current period ≥ the TPS target value TPS-Sn of current period

On the basis of the judgment of the condition as described above, the no-load acceleration detector 2 turns on or off the damping flag DMP. During the damping flag DMP being in the on-state, the TPS target value damper 3 calculates the TPS damp target value TPS-D, and outputs it to the corrector 4. As described above, the corrector 4 selects the TPS damp target value TPS-D as a final TPS target value in place of the TPS target value TPS-S while the damping flag DMP is in the on-state.

Fig. 2 shows an example of the TPS damp target value TPS-D.

In Fig. 2, the dotted line represents variation of the TPS target value TPS-S under normal acceleration, and in this case the ignition-advance is rapidly and performed at one step in response to a rapid step-on operation of the accelerator. On the other hand, the solid line represents variation of the TPS damp target value TPS-D under the no-load acceleration, and in this case the ignition-advance is relatively moderately with ignition-advance rates of three steps. The moderate variation of the ignition-advance as described above can prevent the excessive ignition adance under no-load acceleration, so that the smoke due to excessive ignition-advance can be suppressed.

Fig. 3 is a flowchart showing the whole operation of the fuel jetting timing control of this embodiment.

In an actual fuel injection timing control with a computer, various processing operations containing those processing which are not directly associated with this embodiment are performed. However, these are not illustrated in Fig. 3 because it makes the understanding of this invention more complicated.

In Fig. 3, variables such as the engine speed, the accelerator opening-degree, etc. which are required for the calculation are first input (step 11), and the TPS target value is calculated on the basis of these input data (step 12). Subsequently, the damping control processing is performed to determine the final TPS target value (step 13). The damping control processing contains the operations of the no-load acceleration detector 2, the TPS target value damper 3 and the corrector 4.

If the final TPS target value is determined, a PID (proportional integral and derivative control) operation is conducted on the deviation between the TPS target value and a feed-back signal from the TPS (step 14). On the basis of the PID result, a driving pulse for a timing control valve which serves as an actuator for the timer piston is generated and output (step 15). Through this process, the position of the timer piston is adjusted to control the fuel injection timing. The above processing is repeated every 20ms.

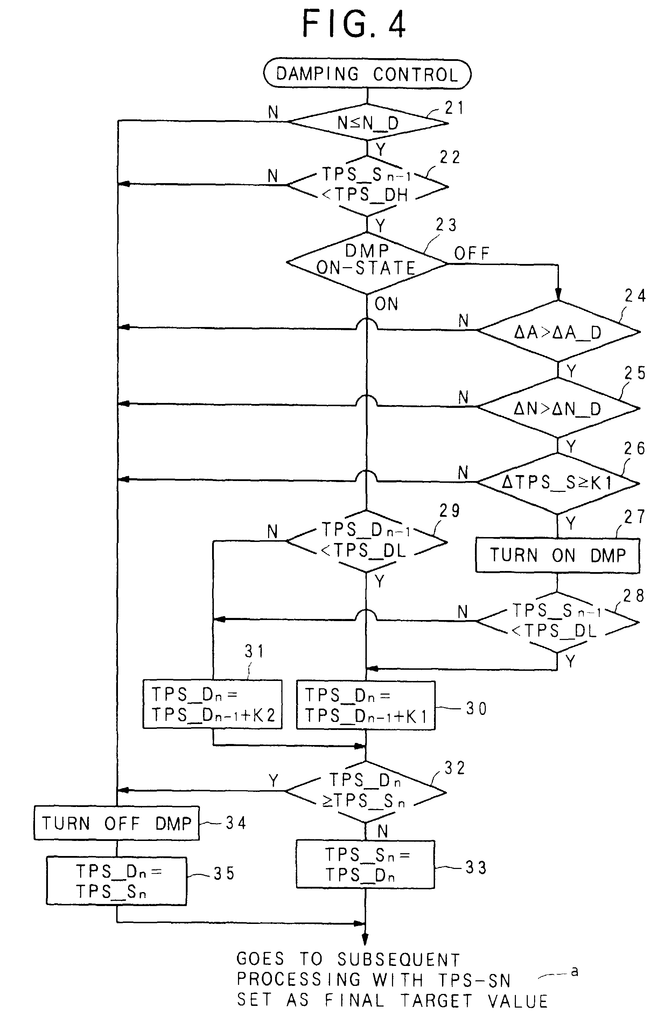

Fig. 4 is a flowchart showing the details of the damping control processing (step 13) of Fig. 3.

In Fig. 4, the judgment is made to the conditions a) and b) of the turn-on condition of the damping flag DMP as described above (steps 21, 22). If both of the conditions a) and b) are satisfied, then the state of the damping flag DMP is checked (step 23). If the damping flag DMP is in the off-state, then the judgment is made to the conditions c), d) and e) of the turn-on condition (steps 24, 25 and 26). If all the conditions c), d) and e) are satisfied, it is judged that the no-load acceleration is started, and the damping flag DMP is turned on (step 27).

If any one of the conditions a) to e) of the turn-on condition is not satisfied in the process from the step 21 to the step 26, it is judged that no-load acceleration is not conducted, and the damping flag DMP is turned off (if it has been in the off-state, the off-state is kept) (step 34).

If the damping flag DMP is turned on at the step 27, then the program goes to the calculation of the TPS damp target value TPS-D shown in Fig. 2. First, it is judged whether the TPS target value TPS-Sn-1 of the previous period is smaller than the first damp target value switching threshold TPS-DL shown in Fig. 2 (step 28). If TPS-Sn-1 is judged to be smaller than TPS-DL (that is, if it is at the ignition delay side), the value obtained by adding the TPS damp target value TPS-Dn-l with a first ignition-advance rate KI shown in Fig. 2 is set as the TPS damp target value TPS-Dn of the current period (step 30). If TPS-Sn-1 is judged to be larger than TPS-DL (it is on the ignition-advance side), the value obtained by adding the TPS damp target value TPS-Dn-l of the previous period to a second ignition-advance rate K2 shown in Fig. 2 is set as the TPS damp target value TPS-Dn of the current period (step 31).

Even when the damping flag DMP has been already in the on-state at the step 23, the program goes to the calculation of the TPS damp target value TPS-D. In this case, it is first judged whether the TPS damp target value TPS-Dn-1 of the previous period is smaller than the first damp target value switching threshold value TPS-DL shown in Fig. 2 (step 29).
The program goes to a step 30 or 31 in accordance with the judgment result to calculate the TPS damp target value TPS-Dn of the current period in the same manner as described above.

If the TPS damp target value TPS-Dn of the current period is calculated at the step 30 or 31, it is checked whether the TPS damp target value TPS-Dn exceeds the TPS target value TPS-Sn of the current period (step 32). If TPS-Dn is judged not to exceed TPS-sn, the TPS target value TPS-Sn of the current period is corrected to the presently-calculated TPS damp target value TPS-Ds (step 33), the corrected TPS target value TPS-Sn is set as the final TPS target value, and then the program goes out of the damping control processing. On the other hand, if TPS-Dn is judged to exceed TPS-Sn, the end of the damping control is judged, and the program goes to a step 34 to turn off the damping flag DMP.

If the damping flag DMP is turned off at the step 34, the TPS damp target value TPS-Dn is corrected to the TPS target value TPS-Sn (step 35), then the TPS target value TPS-Sn is set as the final TPS target value, and then the program goes out of the damping control processing.

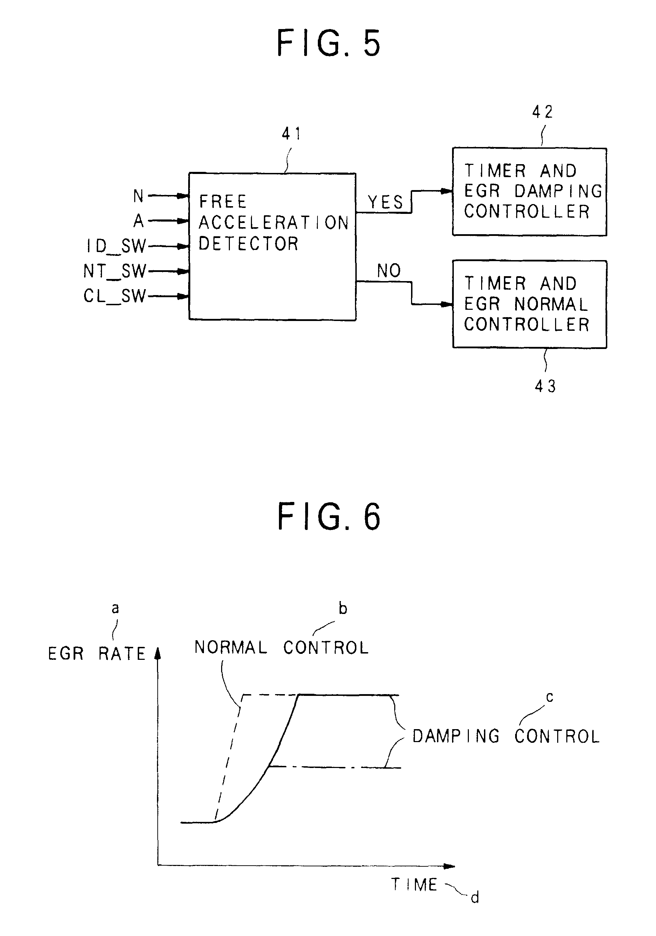

Next, a second embodiment of the smoke reducing device of this invention will be described. The functional scheme of this embodiment is shown in Fig. 5.

In this embodiment, in addition to the engine rotating speed N and the accelerator opening degree A, a signal ID-SW which is output from an idle switch and used to detect the position of an idle lever of a fuel injection pump, a signal which is output from a neutral switch and used to detect the neutral position of a transmission, and a signal CL-SW which is output from a clutch switch and used to detect a switch-off state of a clutch are input to the no-load acceleration detector 41 as judgment elements to detect the no-load acceleration. By using these switch signals, the normal acceleration and the no-load acceleration can be more accurately discriminated from each other than the case where the judgment is made on the basis of only the difference and the variation of the engine rotating speed and the accelerator opening degree A.

Further, in this embodiment, not only the ignition-advance control of the fuel injection timing, but also the EGR control is performed at the normal controller 43, so that the damping control is conducted on both of the ignition-advance fuel injection timing and the EGR rate by the damping controller 42 during the no-load acceleration time.

Fig. 6 shows an example of the damping control of the EGR rate.

According to the normal EGR control, the EGR rate is rapidly increased in a substantially one step during the no-load acceleration as shown by the dotted line of Fig. 6. On the other hand, according to the damping control, the EGR rate is moderately increased as shown by the solid line, or the upper limit of the EGR rate is limited to a low value as indicated by the one-dotted chain line. With this control, the return amount of the exhaust gas at the no-load acceleration time is reduced, and thus the smoke amount can be reduced.

This invention is not limited to the above embodiments, and various modifications may be made to the above embodiments without departing from the subject matter of this invention.

For example, in the first embodiment, the TPS signal is used to detect the fuel injection timing. However, the occurrence timing of the lift at the crank rotational period may be detected as the fuel injection timing using a lift detection signal of the needle valve of a fuel injection nozzle. Further, various elements are used as judgment elements to detect the no-load acceleration in the embodiments as described above. However, the judgment may be made using only these elements, or using other elements.

As described above, according to this invention, the ingnition advance of the fuel injection timing or the EGR rate is more suppressed at the no-load acceleration time than at the normal acceleration time, so that the smoke during the no-load acceleration time can be reduced.

## Claims

1. A smoke reducing device for a diesel engine having an ignition-advance control device which controls the fuel injection timing in accordance with the driving condition, said control device being adapted to provide an advancement of the fuel injection timing when the engine is in a state of acceleration, comprising:
means for detecting a no-load acceleration of the engine; and
damping control means for moderating said advancement operation of the fuel injection timing by the ignition-advance control device when a no-load acceleration is detected.

2. The device as claimed in claim 1, wherein said damping control means includes TPS calculation means for calculating in accordance with the driving condition a TPS target value, which is defined as a control amount for the fuel injection timing with which an optimum fuel injection timing under normal acceleration is obtained, and outputting the calculated TPS target value, damping means for calculating and outputting a TPS damp target value, which is defined as a control amount for the fuel injection timing with which the ignition-advance operation of the fuel injection timing is moderated for the no-load acceleration, and selection means for selecting one of the TPS target value and the TPS damp target value in accordance with the acceleration state and outputting the selected value as a final TPS target value to conduct a feedback control so that the output signal of a timer position sensor is coincident with the final TPS target value.

3. The device as claimed in claim 2, wherein said selection means selects the TPS target value whenthe normal acceleration is detected by said detecting means, and selects the TPS damp target value when the no-load acceleration is detected by said detecting means.

4. The device as claimed in claim 2, wherein said selection means include flag means for turning on a damping flag when the no-load acceleration is detected, and turning off
the damping flag when the normal acceleration is detected, and on the basis of the turn-on or turn-off of the flag, said selection means outputs of the TPS target value or the TPS damp target value.

5. The device as claimed in claim 1, wherein the driving condition contains the rotating number of an engine and the opening degree of an accelerator.

6. A smoke reducing device for a diesel engine having an exhaust gas recirculation control device for controlling the recirculation rate of the exhaust gas in accordance with the driving condition, said control device being adapted for effecting an increase of the recirculation rate when the engine is in a state of acceleration, comprising:
means for detecting a no-load acceleration of the engine; and
damping control means for moderating the increase of the recirculation rate by said control device when a no-load acceleration is detected.

7. A smoke reducing method for a diesel engine having an ignition timing control device for controlling the fuel injection timing in accordance with the driving condition,
said control device being adapted to provide an avancement of the fuel injection timing when the engine is in a state of acceleration, comprising the steps of:
inputting data on the driving condition;
calculating on the basis of the driving condition a timer position sensor target value, which is defined as a target control amount for a fuel injection timing with which an optimum fuel injection timing for a normal acceleration is obtained;
detecting whether the engine is in a state of no-load acceleration;
calculating a damp target value, which is defined as a target damp control amount for a fuel injection timing with which the advancement operation of the fuel injection timing is moderated for the no-load acceleration; and
selecting said target value or said damp target value in accordance with the driving condition and outputting the selected value as a final target value to perform the damping control.

8. The method as claimed in claim 7, further comprising the step of setting a damping flag to an on-state when the no-load acceleration occurs, and to an off-state when no no-load acceleration occurs, wherein at the selecting step the TPS target value is selected as the final TPS target value when the damping flag is in the on-state, and the TPS damp target value is selected as the final TPS target value when the damping flag is in the off-state.

9. The method as claimed in claim 7, wherein said detecting means comprises a step of judging whether all the following conditions are satisfied when the damping flag is in the off-state:
a) engine rotating number N ≤ a predetermined commonly-used upper limit rotating number N-D
b) TPS target value TPS-Sn-1 of previous period < a predetermined second damp target value switching threshold value TPS-DH
c) accelerator opening degree variation ΔA > a predetermined accelerator variation threshold value ΔA-D
d) engine rotating number variation ΔN > a predetermined engine rotating number variation threshold value ΔN-D
e) TPS target value variation ΔTPS-S ≥ a predetermined first damp target value ignition-advance rate K1,
or judging whether all the following conditions are satisfied when the damping flag is in the on-state:
f) engine rotating number N > a commonly-used upper limit rotating number N-D
g) TPS damp target value TPS-Dn-1 of previous period ≥ a second damp target value switching threshold value TPS-DH
h) TPS damp target value TPS-Dn of current period ≥ a TPS target value TPS-Sn of current period; and wherein said damping flag setting step includes a step of judging that the no-load acceleration is started if all the conditions a) to e) are satisfied, and setting the damping flag to the on-state, or judging that no-load acceleration is terminated if all the conditions f) to h) are satisfied.

10. The method as claimed in claim 7, further comprising the steps of:
calculating a deviation between the final TPS target value and a feedback signal of a TPS (timer position sensor);
conducting a proportional integral and derivative control (PID) operation on the deviation; and adjusting the position of a timer piston on the basis of the PID operation result to adjust the fuel injection timing.

11. The method as claimed in claim 7, wherein the driving condition contains the rotating number of the engine and the opening degree of the accelerator.

12. A smoke reducing method for a diesel engine having an exhaust gas recirculation control device for controlling the recirculation rate of the exhaust gas in accordance with the driving condition, said control device being adapted to increase the recirculation rate when the engine is in a state of acceleration, comprising the steps of:
inputting data on the driving condition;
calculating on the basis of the driving condition a target control amount for adjusting the recirculation rate with which an optimum recirculation rate for normal acceleration is obtained;
detecting whether the engine is in a state of no-load acceleration;
calculating a target damp control amount for the recirculation rate with which the increase of the recirculation rate is moderated for the no-load acceleration, and
selecting said target control amount or said target damp control amount in accordance with the driving condition and outputting the selected value as a final target control amount to perform a damping control.

## Patentansprüche

1. Rauchverringerungsvorrichtung für einen Dieselmotor mit einer Zündvorstellungs-Steuerungsvorrichtung, welche den Kraftstoffeinspritz-Zeitpunkt entsprechend einem Fahrzustand steuert, wobei die Steuerungsvorrichtung ausgelegt ist, um eine Vorverlegung des Kraftstoffeinspritz-Zeitpunktes zu erzeugen, wenn der Motor in einem Beschleunigungszustand ist, und welche aufweist:
ein Mittel zum Erfassen einer Nullast-Beschleunigung des Motors; und
ein Abschwächungs-Steuerungsmittel zum Abschwächen der Vorverlegung des Kraftstoffeinspritz-Zeitpunktes durch die Zündvorstellung-Steuerungsvorrichtung, wenn eine Nullast-Beschleunigung erfaßt wird.

2. Vorrichtung nach Anspruch 1, bei welcher das Abschwächungs-Steuerungsmittel enthält: ein TPS-Berechnungsmittel, um entsprechend dem Fahrzustand einen TPS-Wert zu berechnen, der als ein Steuerungsbetrag für den Kraftstoffeinspritz-Zeitpunkt definiert ist, mit dem ein optimaler Kraftstoffeinspritz-Zeitpunkt unter Normalbeschleunigung erzielt wird, und den berechneten TPS-Zielwert auszugeben; ein Abschwächungsmittel zum Berechnen und Ausgeben eines TPS-Abschwäch-Zielwertes, der als Steuerungsbetrag für den Kraftstoffeinspritz-Zeitpunkt definiert ist, mit dem der Zündvorstellung-Vorgang des Kraftstoffeinspritz-Zeitpunkts für die Nullast-Beschleunigung moderiert wird; und ein Auswahlmittel zum Auswählen des TPS-Zielwertes oder des TPS-Abschwäch-Zielwertes entsprechend dem Beschleunigungszustand und Ausgeben des ausgewählten Wertes als einen endgültigen TPS-Zielwert, um eine Rückkopplungssteuerung durchzuführen, so daß das Ausgabesignal eines Zeitpunkt sensors mit dem endgültigen TPS-Zielwert zusammenfällt.

3. Vorrichtung nach Anspruch 2, bei welcher das Auswahlmittel den TPS-Zielwert auswählt, wenn eine Normalbeschleunigung vom Erfassungsmittel erfaßt wird, und den TPS-Abschwäch-Zielwert auswählt, wenn eine Nullast-Beschleunigung vom Erfassungsmittel erfaßt wird.

4. Vorrichtung nach Anspruch 2, bei welcher das Auswahlmittel ein Markierungsmittel enthält zum Einschalten einer Abschwäch-Markierung, wenn die Nullast-Beschleunigung erfaßt wird, und Ausschalten der Abschwäch-Markierung, wenn die Normalbeschleunigung erfaßt wird, und wobei auf der Basis des Einschaltens oder Ausschaltens der Markierung das Auswahlmittel den TPS-Zielwert oder den TPS-Abschwäch-Zielwert ausgibt.

5. Vorrichtung nach Anspruch 1, bei welcher der Fahrzustand die Drehzahl eines Motors und den Öffnungsgrad einer Beschleunigungsvorrichtung enthält.

6. Rauchverringerungsvorrichtung für einen Dieselmotor mit
einer Abgasrückführung-Steuerungsvorrichtung zum Steuern der Rückführgeschwindigkeit des Abgases entsprechend dem Fahrzustand, wobei die Steuerungsvorrichtung ausgelegt ist, um eine Zunahme der Rückführgeschwindigkeit zu bewirken, wenn der Motor in einem Beschleunigungszustand ist, und welche aufweist:
ein Mittel zum Erfassen einer Nullast-Beschleunigung des Motors; und
ein Abschwächung-Steuerungsmittel zum Abschwächen der Zunahme der Rückführgeschwindigkeit durch die Steuerungsvorrichtung, wenn eine Nullast-Beschleunigung erfaßt wird.

7. Rauchverringerungsverfahren für einen Dieselmotor mit einer Zündvorstellung-Steuerungsvorrichtung zum Steuern des Kraftstoffeinspritz-Zeitpunkts entsprechend einem Fahrzustand, wobei die Steuerungsvorrichtung ausgelegt ist, um eine Vorverlegung des Kraftstoffeinspritz-Zeitpunktes zu erzeugen, wenn der Motor in einem Beschleunigungszustand ist, und welches die folgenden Schritte aufweist:
Eingeben von Daten über den Fahrzustand;
auf der Grundlage des Fahrzustands, Berechnen eines Zeitgeber-Positionssensor(TPS)-Zielwertes, der als ein Ziel-Steuerungsbetrag für den Kraftstoffeinspritz-Zeitpunkt definiert ist, mit dem ein optimaler Kraftstoffeinspritz-Zeitpunkt für eine Normalbeschleunigung erzielt wird;
Erfassen, ob der Motor im Zustand der Nullast-Beschleunigung ist;
Berechnen eines Abschwäch-Zielwertes, der als Zielabschwäch-Steuerungsbetrag für einen Kraftstoffeinspritz-Zeitpunkt definiert ist, mit dem der Zündvorstellung-Vorgang des Kraftstoffeinspritz-Zeitpunkts für die Nullast-Beschleunigung moderiert wird; und
Auswählen des Zielwertes oder des Abschwäch-Zielwertes entsprechend dem Fahrzustand und Ausgeben des ausgewählten Wertes als endgültiger Zielwert, um die Abschwäch-Steuerung durchzuführen.

8. Verfahren nach Anspruch 7, mit dem weiteren Schritt des Einstellens einer Abschwäch-Markierung auf einen Ein-Zustand, wenn die Nullast-Beschleunigung stattfindet, und einen Aus-Zustand, wenn keine Nullast-Beschleunigung stattfindet, wobei bei dem Auswahlschritt der TPS-Zielwert als der endgültige TPS-Zielwert ausgewählt wird, wenn die Abschwäch-Markierung im Ein-Zustand ist, und der TPS-Abschwäch-Zielwert als der endgültige TPS-Zielwert ausgewählt wird, wenn die Abschwäch-Markierung im Aus-Zustand ist.

9. Verfahren nach Anspruch 7, bei welchem das Erfassungsmittel einen Schritt aufweist zum Beurteilen, ob alle der folgenden Bedingungen erfüllt sind, wenn die Abschwäch-Markierung im Aus-Zustand ist:
a) Motordrehzahl N ≤ eine vorbestimmte üblicherweise verwendete obere Grenzdrehzahl N-D;
b) TPS-Zielwert TPS-Sn-1 einer vorherigen Periode < ein vorbestimmter zweiter Abschwächzielwert-Umschaltschwellenwert TPS-DH;
c) Beschleunigungsvorrichtung-Öffnungsgradänderung ΔA > ein vorbestimmter Beschleunigungsvorrichtung-Änderungsschwellenwert ΔA-D;
d) Motordrehzahl-Änderung ΔN > ein vorbestimmter Motordrehzahl-Änderungsschwellenwert ΔN-D;
e) TPS-Zielwert-Änderung ΔTPS-S ≥ eine vorbestimmte erste Abschwächzielwert-Zündvorstellgeschwindigkeit K1;
oder Beurteilen, ob alle folgenden Bedingungen erfüllt sind, wenn die Abschwäch-Markierung im Ein-Zustand ist:
f) Motordrehzahl N > eine üblicherweise verwendete obere Grenzdrehzahl N-D;
g) TPS-Abschwäch-Zielwert TPS-Dn-1 der vorherigen Periode ≥ ein zweiter Abschwächzielwert-Umschaltschwellenwert TPS-DH;
h) TPS-Abschwäch-Zielwert TPS-Dn der aktuellen Periode ≥ ein TPS-Zielwert TPS-Sn der aktuellen Periode; und
wobei der Schritt zum Einstellen der Abschwäch-Markierung einen Schritt enthält zum Entscheiden, daß die Nullast-Beschleunigung gestartet wird, falls alle Bedingungen a) bis e) erfüllt sind, und Einstellen der Abschwäch-Markierung auf den Ein-Zustand, oder Entscheiden, daß die Nullast-Beschleunigung beendet wird, falls alle Bedingungen f) bis h) erfüllt sind.

10. Verfahren nach Anspruch 7, welches außerdem die folgenden Schritte aufweist:
Berechnen einer Abweichung zwischen dem endgültigen TPS-Zielwert und einem Rückkopplungssignal eines TPS (Zeitpunktsensor);
Durchführen einer proportionalen Integral- und Ableitung-Steuerung-(PID)-Operation an der Abweichung; und
Einstellen der Position eines Zeitgeber-Kolbens auf der Grundlage des Ergebnisses der PID-Operation, um den Kraftstoffeinspritz-Zeitpunkt einzustellen.

11. Verfahren nach Anspruch 7, bei welchem der Fahrzustand die Drehzahl des Motors und den Öffnungsgrad der Beschleunigungsvorrichtung enthält.

12. Rauchverringerungsverfahren für einen Dieselmotor mit einer
Abgasrückführung-Steuerungsvorrichtung zum Steuern der Rückführgeschwindigkeit des Abgases entsprechend dem Fahrzustand, wobei die Steuerungsvorrichtung ausgelegt ist, um eine Zunahme der Rückführgeschwindigkeit zu bewirken, wenn der Motor in einem Beschleunigungszustand ist, und welches die folgenden Schritte aufweist:
Eingeben von Daten über den Fahrzustand;
auf der Grundlage des Fahrzustands, Berechnen eines Ziel-Steuerungsbetrags zum Einstellen der Rückführgeschwindigkeit, mit der eine optimale Rückführgeschwindigkeit für eine Normalbeschleunigung erzielt wird;
Erfassen, ob der Motor im Zustand der Nullast-Beschleunigung ist;
Berechnen eines Ziel-Abschwächsteuerungsbetrags für die Rückführgeschwindigkeit, mit der die Zunahme der Rückführgeschwindigkeit für die Nullast-Beschleunigung moderiert wird; und
Auswählen des Ziel-Steuerungsbetrags oder des Ziel-Abschwächsteuerungsbetrags entsprechend dem Fahrzustand und Ausgeben des ausgewählten Wertes als endgültiger Ziel-Steuerungsbetrag, um eine Abschwäch-Steuerung durchzuführen.

## Revendications

1. Dispositif de réduction de fumée pour un moteur Diesel ayant un dispositif de commande d'avance à l'allumage qui commande le point d'injection de carburant en accord avec l'état de conduite, ledit dispositif de commande étant adapté à prévoir une avance au point d'injection de carburant lorsque le moteur est dans un état d'accélération, comprenant:
un moyen pour détecter une accélération sans charge dudit moteur; et
un moyen de commande d'amortissement pour modérer ladite opération d'avance au point d'injection de carburant par ledit dispositif de commande d'avance à l'allumage lorsqu'une accélération sans charge est détectée.

2. Dispositif selon la revendication 1, dans lequel ledit moyen de commande d'amortissement comporte un moyen de calculation de TPS pour calculer, en accord avec l'état de conduite, une valeur but de TPS qui est definie comme quantité de commande pour le point d'injection de carburant avec lequel on obtient un point d'injection de carburant optimal lors d'une accélération normale, et fournir en sortie ladite valeur but de TPS calculée; un moyen amortisseur pour calculer et fournir en sortie une valeur but d'amortissement de TPS qui est définie comme quantité de commande pour le point d'injection de carburant avec lequel l'opération d'avance à l'allumage du point d'injection de carburant est modérée pour l'accélération sans charge; et un moyen de sélection pour choisir soit ladite valeur but de TPS, soit ladite valeur but d'amortissement de TPS en accord avec l'état d'accélération, et fournir en sortie ladite valeur choisie en tant que valeur but finale de TPS afin d'effectuer un réglage à réaction de sorte que le signal fourni en sortie d'un capteur-minuterie de position coïncide avec ladite valeur but finale de TPS.

3. Dispositif selon la revendication 2, dans lequel ledit moyen de sélection choisit ladite valeur but de TPS lorsque l'accélération normale est détectée par ledit moyens de détection, et choisit ladite valeur but d'amortissement de TPS lorsque l'accélération sans charge est détectée par ledit moyen de détection.

4. Dispositif selon la revendication 2, dans lequel ledit moyen de sélection comporte un moyen indicateur pour mettre en marche un indicateur d'amortissement lorsque l'accélération sans charge est détectée, et arrêter ledit indicateur d'amortissement lorsque l'accélération normale est détectée, et, selon la mise en marche ou l'arrêt dudit indicateur, ledit moyen de sélection fournit en sortie soit ladite valeur but de TPS, soit ladite valeur but d'amortissement de TPS.

5. Dispositif selon la revendication 1, dans lequel l'état de conduite comporte le nombre de tours d'un moteur et le degré d'ouverture d'un dispositif accélérateur.

6. Dispositif de réduction de fumée pour un moteur Diesel ayant un dispositif de commande à recirculation de gaz d'échappement pour commander le taux de recirculation du gaz d'échappement en accord avec l'état de conduite, ledit dispositif étant adapté pour effectuer une augmentation du taux de recirculation lorsque le moteur est dans un état d'accélération, comprenant:
un moyen pour détecter une accélération sans charge dudit moteur; et
un moyen de commande d'amortissement pour modérer l'augmentation du taux de recirculation par ledit moyen de commande lorsqu'une accélération sans charge est détectée.

7. Méthode de réduction de fumée pour un moteur Diesel ayant un dispositif de commande de point d'injection pour commander le point d'injection de carburant selon l'état de conduite,
ledit dispositif de commande étant adapté à prévoir une avance au point d'injection de carburant lorsque le moteur est dans un état d'accélération, comprenant des étapes consistant à:
entrer des données sur l'état de conduite;
calculer, à partir de l'état de conduite, une valeur but de capteur-minuterie de position (TPS) qui est définie comme quantité but de commande pour un point d'injection de carburant avec lequel on obtient un point d'injection de carburant optimal pour une accélération normale;
détecter si le moteur est dans un état d'accélération sans charge;
calculer une valeur but d'amortissement qui est définie comme une quantité but de commande d'amortissement pour un point d'injection de carburant avec lequel l'opération d'avance au point d'injection de carburant est modérée pour l'accélération sans charge; et
choisir soit ladite valeur but, soit ladite valeur but d'amortissement selon l'état de conduite et fournir en sortie ladite valeur choisie comme valeur but finale afin d'effectuer ladite commande d'amortissement.

8. Méthode selon la revendication 7, comprenant en outre l'étape de régler un indicateur d'amortissement sur un état de marche lorsque l'accélération sans charge se produit, et sur un état d'arrêt lorsqu'aucune accélération sans charge se produit, et dans laquelle, lors de l'étape de sélection, ladite valeur but de TPS est choisie comme valeur but finale de TPS lorsque ledit indicateur d'amortissement est dans l'état de marche, et ladite valeur but d'amortissement de TPS est choisie comme valeur but finale de TPS lorsque ledit indicateur d'amortissement est dans l'état d'arrêt.

9. Méthode selon la revendication 7, dans laquelle ledit moyen de détection comprend une étape pour décider si toutes les conditions suivantes sont satisfaites lorsque l'indicateur d'amortissement est dans l'état d'arrêt:
a) nombre de tours du moteur N ≤ un nombre prédéterminé de tours de limite supérieure et d'usage commun N-D;
b) valeur but de TPS, TPS-Sn-1, de la période précédente < une seconde valeur seuil prédéterminée de commutation de valeur but d'amortissement TPS-DH;
c) variation du degré d'ouverture de l'accélérateur ΔA > une valeur seuil prédéterminée de variation d'accélérateur ΔA-D;
d) variation du nombre de tours du moteur ΔN > une valeur seuil prédéterminée de variation du nombre de tours du moteur ΔN-D;
e) variation de valeur but de TPS, ΔTPS-S, ≥ un premier taux prédéterminé d'avance à l'allumage de valeur but d'amortissement K1;
ou décider si toutes les conditions suivantes sont satisfaites lorsque l'indicateur d'amortissement est dans l'état de marche:
f) nombre de tours du moteur N > un nombre prédéterminé de tours de limite supérieure et d'usage commun N-D;
g) valeur but d'amortissement de TPS, TPS-Dn-1, de la période précédente ≥ une seconde valeur seuil de commutation de valeur but d'amortissement TPS-DH;
h) valeur but d'amortissement de TPS, TPS-Dn, de la période courante ≥ une valeur but de TPS, TPS-Sn, de la période courante; et
dans laquelle ladite étape de réglage d'indicateur d'amortissement comporte une étape pour décider que l'accélération sans charge est mise en marche lorsque toutes les conditions a) à e) sont satisfaites, et régler l'indicateur d'amortissement sur l'état de marche, ou décider que l'accélération sans charge est terminée lorsque toutes les condition f) à h) sont satisfaites.

10. Méthode selon la revendication 7, comprenant en outre des étapes consistant à:
calculer une déviation entre la valeur but finale de TPS et un signal de rétroaction d'un TPS (capteur-minuterie de position);
effectuer une opération de commande proportionelle d'intégrale et de dérivée (PID) sur ladite déviation; et
ajuster la position d'un piston-minuterie à partir du résultat de ladite opération PID afin d'ajuster le point d'injection de carburant.

11. Méthode selon la revendication 7, dans laquelle l'état de conduite comporte le nombre de tours du moteur et le degré d'ouverture du dispositif accélérateur.

12. Méthode de réduction de fumée pour un moteur Diesel ayant un dispositif de commande de recirculation de gaz d'échappement pour commander le taux de recirculation du gaz d'échappement selon l'état de conduite, ledit dispositif de commande étant adapté à augmenter le taux de recirculation lorsque le moteur est dans un état d'accélération, comprenant des étapes consistant à:
entrer des données sur l'état de conduite;
calculer, à partir de l'état de conduite, une quantité but de commande pour ajuster le taux de recirculation avec lequel un taux optimal de recirculation pour l'accélération normale est obtenu;
détecter si le moteur est dans un état d'accélération sans charge;
calculer une quantité but de commande d'amortissement pour le taux de recirculation avec laquelle l'augmentation du taux de recirculation est modérée pour l'accélération sans charge; et
choisir soit ladite quantité but de commande, soit ladite quantité but de commande d'amortissement selon l'état de conduite et fournir en sortie ladite valeur choisie en tant que quantité but finale de commande afin d'effectuer une commande d'amortissement.
